# EUROPEAN PATENT SPECIFICATION

(11) **EP 3 214 482 B1**
(45) Date of publication and mention of the grant of the patent: **26.09.2018**
(21) Application number: 17167931.9
(22) Date of filing: 21.12.2012
(51) Int. Cl.: G02C 7/02, G02C 13/00, G06K 19/06, B29C 59/16, G06K 7/10, C03C 23/00

(54) **STORING INFORMATION ON A SPECTACLES LENS, SPECTACLES LENS BLANK OR SPECTACLES LENS SEMI-FINISHED PRODUCT**
SPEICHERUNG VON INFORMATIONEN IN BRILLENGLAS, BRILLENGLASROHLING ODER HALBFABRIKAT
STOCKAGE D'INFORMATIONS POUR L'IDENTIFICATION DANS UNE VERRE DE LUNETTES, UNE ÉBAUCHE DE VERRE À LUNETTE OU DANS UN PRODUIT SEMI-FINI

(30) Priority: 22.12.2011 DE 102011089704; 10.01.2012 US 201261585149 P
(43) Date of publication of application: 06.09.2017
(62) Divisional of application: 12818506.3
(73) Proprietor: Carl Zeiss Vision International GmbH, 73430 Aalen (DE)
(72) Inventor: DANGELMAIER, Andreas, 73434 Aalen (DE); HOLTMANN, Simon, Seaford Rise, 5169 (AU); SCHÖN, Roland, 73433 Aalen (DE); HORNAUER, Matthias, 73466 Lauchheim-Hülen (DE)
(74) Representative: Gauss, Nikolai

(56) References cited:
- EP-A1- 2 184 127
- EP-A1- 2 239 552
- WO-A2-03/049952
- DE-A1-102007 037 730
- FR-A1- 2 758 754
- FR-A1- 2 879 313
- US-A- 4 310 242

## Description

The invention as defined in the claims relates to a method for storing information on a glass- or plastic body embodied as spectacle lens, as spectacle lens blank for a spectacles lens or spectacle lens semi-finished product for a spectacles lens. Moreover, the invention relates to a glass- or plastic body in the form of a spectacles lens, a spectacles lens blank for a spectacles lens or a spectacles lens semi-finished product for a spectacles lens, comprising a marking arranged at a definition point of the local coordinate system. Moreover, the invention relates to a device for storing information on a spectacles lens, a spectacles lens blank for a spectacles lens or a spectacles lens semi-finished product for a spectacles lens.

WO 03/49952 A2 discloses providing a permanent marking on a spectacle lens which contains information in the form of data. It is suggested that the content of this information is such that the information allows unambiguous identification of the spectacle lens.

EP 2 239 552 A1 describes a lens image sensing apparatus which includes an image sensing device for obtaining sharp images of permanent marks on a lens. The image sensing apparatus has a light source providing an illumination light beam passing through the lens. It includes a reflector for reflecting the illumination light beam after passing through the lens in order to pass again through the lens to impinge on an image sensing device which is connected to an imaging processing device.

Here, a spectacles lens blank is understood to mean a usually pre-shaped piece of material for producing a lens, in any state before the surface treatment has been completed. Spectacles lens semi-finished goods, which are also referred to as spectacles lens semi-finished products, are lens blanks where the optical processing has only been finished on one surface.

In order to provide a spectacles wearer with sharp vision, the spectacles lenses in a spectacles frame must be positioned and aligned correctly with respect to the eyes of the spectacles wearer. This is particularly important in the case of progressive power lenses. Progressive power lenses provide spectacles wearers with sharp vision at different ranges, without requiring accommodation of the eyes. Progressive power lenses have a distance reference point and a near reference point.

Specialists also refer to the near reference point and the distance reference point of progressive power lenses as near design reference point and distance design reference point respectively. A definition of these points is specified in Chapters 5.13 and 5.14 of the EN ISO 13666:1998 standard, the whole scope of which is referenced herewith.

However, optimum vision with progressive power lenses presupposes that the progressive power lenses held in a spectacles frame are positioned in front of the eyes of the spectacles wearer such that the position of the distance reference point and the position of the near reference point coincide with the corresponding viewing directions of the spectacles wearer into the distance and into the vicinity thereof. It is for this reason that, pursuant to the specifications in Section 7 of the standardization regulations DIN EN ISO 8980-2:2004, progressive power spectacles lenses must be permanently provided with at least two markings. Pursuant to the aforementioned standard, these at least two markings must exist on a progressive power spectacles lens with a spacing of 34 mm and must be arranged symmetrically with respect to a vertical plane through the fitting point or the prism reference point. These two markings define a local, body-specific coordinate system for the spectacles lens. These markings can be used to reconstruct in a spectacles lens both the lens horizontal and the distance and near reference points, the so-called fitting point defined in Chapter 5.24 of the EN ISO 13 666:1998 standard or the prism reference point defined in Chapter 14.2.12 of the EN ISO 13 666:1998 standard.

Pursuant to the EN ISO 13 666:1998 standard, the fitting point is a point on the front surface of a spectacles lens or spectacles lens semi-finished product, which, according to the specification from the manufacturer, should serve as reference point for positioning the spectacles lens in front of the eyes.

In the case of uncut spectacles lenses, which an optician receives from a spectacles lens manufacturer after measuring the spectacles, the position of these points is implicitly specified by the aforementioned markings. That is to say, an optician can establish the distance and near reference point, the fitting point and the prism reference point on the basis of the aforementioned markings. Pursuant to the EN ISO 13 666:1998 standard, the prism reference point is the point specified by a manufacturer on the front surface of a progressive power spectacles lens or a progressive power spectacles lens semi-finished product at which the prismatic effects of the completed lens have to be determined.

This makes it easier for an optician to align the uncut spectacles lens correctly prior to grinding and then to insert it into a spectacles frame in the correct position such that the spectacles wearer is provided with optimum vision.

In order to ensure that specifications on a spectacles lens do not have an adverse effect on the vision of the spectacles wearer, the specifications applied by the manufacturer to an uncut spectacles lens are removed as far as possible by an optician before the lens is inserted into a spectacles frame. The result of this is that e.g. the position of the near and distance reference point of a spectacles lens can only be established with comparatively much effort after being inserted into a spectacles frame.

An object of the invention is to save individual spectacles lens information on a glass- or plastic body in the form of a spectacles lens or a spectacles lens precursor, i.e. a spectacles lens blank or a spectacles lens semi-finished product, such that the vision of a spectacles wearer therethrough is not adversely affected and that this information can also be accessed when the spectacles lens, or a spectacles lens manufactured from the spectacles lens blank, is inserted into a spectacles frame or has fallen out of a spectacles frame.

This object is achieved by a method for storing information in the form of data on a glass- or plastic body embodied as spectacles lens, spectacles lens blank or spectacles lens semi-finished product, in which the information on or in the glass- or plastic body is stored by creating at least one permanent marking, which can be read by a reader, by means of a marking system, which has an interface for reading information individualizing this glass- or plastic body, with the at least one permanent marking being created on or in the glass- or plastic body at a definition point of a local body-specific coordinate system set by two points on or in the glass- or plastic body, for the manufacturer-side specification of the position of the lens horizontal and/or the distance and/or the near and/or the prism reference point.

Within the context of this invention, data is, pursuant to the DIN ISO/IEC 2382 standard, in this case understood to mean structures of signs or continuous functions, which constitute information as a result of known or implied conditions.

The method according to the invention renders it possible to store information individualizing a spectacles lens permanently on a spectacles lens glass- or plastic body, without this needing to exceed the number of permanent markings prescribed in the standardization regulation DIN EN ISO 8980-2:2004.

Here, information individualizing a spectacles lens is understood to mean information which is different for each spectacles lens in a large set with billions of spectacles lenses, corresponding to a chassis number in motor vehicles. By way of example, a natural number with sufficiently many digits is suitable as information individualizing a spectacles lens. The information individualizing a spectacles lens more particularly renders it possible to avoid mix ups between spectacles lenses or spectacles lens blanks in an operating manufacturing process, through which several 10 000 spectacles lens blanks often pass in one day. Individualization information for spectacles lenses also makes it easier to search for errors in a manufacturing process because, accordingly, manufacturing errors in individual spectacles lenses can then be related to specific process steps. Spectacles lens manufacturing can also be automated more easily with information that individualizes spectacles lenses and is stored on the spectacles lenses because the individual glass- or plastic bodies can be uniquely identified before, during or after each process step during manufacturing, and hence a so-called batch tracking is possible. Moreover, information individualizing a single spectacles lens can simplify and improve the quality control of spectacles lenses over the manufacturing process.

The long-lasting marking applied to the spectacles lens by the marking system is a permanent marking. Here, a permanent marking of a glass- or plastic body in the form of a spectacles lens, spectacles lens blank or spectacles lens semi-finished product is understood to mean a marking which adheres to a spectacles lens over the whole service life thereof.

In particular, such a permanent marking provides protection against brand piracy because it can be used to identify a spectacles lens uniquely. By way of example, the permanent marking can be created by laser engraving, chiselling, micro-drilling, impressing or printing.

The marking created on or in the glass- or plastic body being a phase object renders it possible that this marking is not visible to a spectacles wearer when wearing corresponding spectacles and does not bother the spectacles wearer.

Here, a phase object is understood to mean an object which, when irradiated by light in the visible spectral range, only changes the phase of the light waves passing through the object without there being a significant influence on the amplitude of the light waves in the process. To the unarmed eye of an observer, i.e. an eye without artificial visual aids, the marking on or in the glass- or plastic body of a spectacles lens then is invisible.

A high-quality phase object marking in a spectacles lens glass- or plastic body can be created by an excimer laser in particular. It is possible to use such an excimer laser to create a marking by burning a multiplicity of pixels into a glass- or plastic body embodied as spectacles lens, spectacles lens blank or semi-finished product. Here, one discovery of the invention is that this marking does not adversely affect the vision of a spectacles wearer if the pixels have a diameter D lying in the range 60 µm ≤ D ≤ 100 µm and have a depth T which is 0.5 µm ≤ T ≤ 2.5 µm. Such a marking renders it possible to store information in the form of a digital code on a spectacles lens glass- or plastic body, which code is composed of individual pixels. The digital code can be a data matrix code, more particularly a data matrix code pursuant to the ISO/IEC 16022:2000 standard, e.g. a DataMatrix ECC200 code. In the process, it was found that a marking with a square external contour which has a side length A of between 1.5 mm and 2.5 mm is able to store about 1600 bits of information, i.e. the information of more than 1 billion numbers. As a result of the geometric centroid of the convex envelope of the marking, e.g. the data matrix code, being a definition point of a local coordinate system defining the lens horizontal and/or the distance and/or the near reference point, a definition point of this coordinate system can be specified very precisely.

Such a code renders it possible to create patterns with a contour, the convex envelope of which reproduces a trademark and/or a company logo. In particular, such a code can replicate a trademark and/or company logo created by laser inscription or printing on the spectacles lens.

An idea of the invention is also to use such a pattern of the pixels which, for example, form a data matrix code, and a further marking, for example embodied as trademark and/or company logo, created on or in the glass- or plastic body to define the local glass- or plastic body coordinate system for the manufacturer-side specification of the position of the lens horizontal and/or the distance and/or the near and/or the prism reference point.

A spectacles lens, on which information is stored such that the spectacles lens is individualized as a result thereof and the position of the local coordinate system is specified, allows fast identification of assembly errors in a spectacles frame, particularly in the case of progressive power lenses. Such a spectacles lens with the information stored thereon can also be protected from forgery.

A device enabling the storage according to the invention of information on a glass- or plastic body in the form of a spectacles lens, spectacles lens semi-finished product or spectacles lens blank contains an interface connected to a marking system, for reading digital information that individualizes the spectacles lens. The marking system is coupled to a referencing arrangement for establishing the relative position of the spectacles lens coordinate system with respect to the coordinates of the marking system. The interface transmits information that individualizes the glass- or plastic body to the marking system. In the process, it creates a marking containing this information on the spectacles lens. In the process, the marking system applies the marking to a definition point of a local glass- or plastic body coordinate system, i.e. a body-specific coordinate system, which defines the lens horizontal and/or the distance and/or the near reference point and/or the prism reference point.

The information stored on a spectacles lens glass- or plastic body as described above can then be read by a reader. Such a reader preferably contains a light source for generating an illumination light beam which passes through a spectacles lens to be read. After passing through the spectacles lens, said illumination light beam is reflected at a reflector. Thus it once again passes through the spectacles lens and is then fed to a camera. This camera is connected to a computer unit which contains a program storage medium with an evaluation program for capturing and decoding the digital information from the marking.

The invention is defined in the claims and will be explained in more detail below on the basis of the exemplary embodiments illustrated in the drawing in a schematic fashion. In detail:
- Figure 1: shows progressive power spectacles with spectacles lenses;
- Figure 2: shows a spectacles lens of the progressive power spectacles with markings that define a local coordinate system;
- Figure 3: shows a section of the spectacles lens with a marking in the form of a data matrix code;
- Figure 4: shows a section of a further spectacles lens with a marking composed of pixels;
- Figure 5: shows a spectacles lens blank with markings that define a local coordinate system;
- Figure 6: shows a device for marking spectacles lenses with a data matrix code; and
- Figure 7: shows a device for reading the information stored on a spectacles lens by means of a data matrix code.

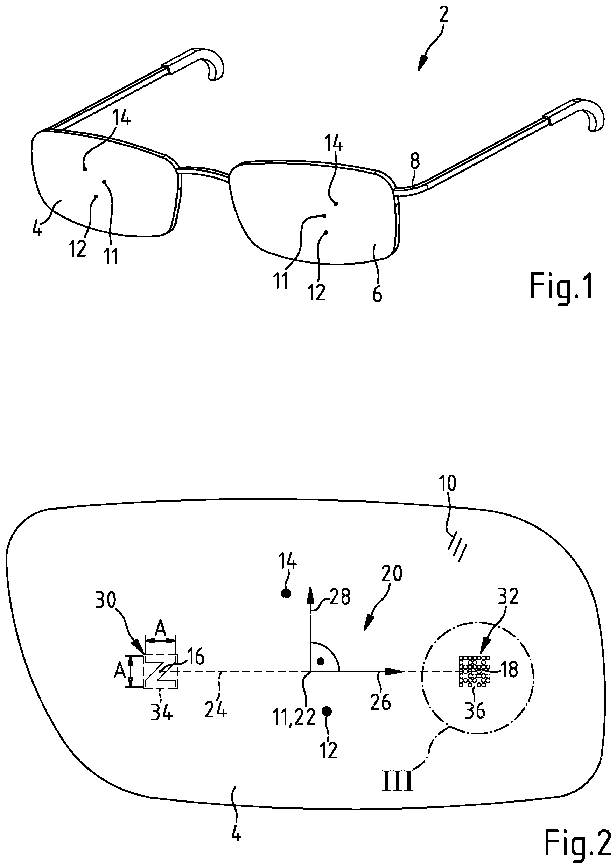

The progressive power spectacles 2 in figure 1 have two glass- or plastic bodies 4, 6, namely a first progressive power spectacles lens 4 and a second progressive power spectacles lens 6. The spectacles lenses 4, 6 are fixed in a spectacles frame 8. The topography of the spectacles lenses 4, 6 is fitted to the individual visual requirements of a spectacles wearer. The spectacles lenses 4, 6 each contain a prism reference point 11. They each have a near reference point 12 and a distance reference point 14. In respect of the near reference point 12 and the distance reference point 14, a spectacles lens manufacturer also specifies the refractive index of the spectacles lens there for an optician so that the latter can check the spectacles lens obtained from the manufacturer. In respect of the prism reference point 11, the manufacturer provides an optician with the specific prismatic effect of the spectacles lens.

Figure 2 shows the spectacles lens 4 of the progressive power spectacles 2 from figure 1 in a magnified view. On lens surface 10 facing an observation object, the spectacles lens 4 has a marking point 16 and a marking point 18. The marking points 16, 18 define a local body-specific glass- or plastic body coordinate system 20 for the spectacles lens 4. The local glass- or plastic body coordinate system 20 has an origin 22 which, for example, coincides with the prism reference point 11 of the spectacles lens 4 and which is situated at the centre of the imaginary connecting line 24 between the marking points 16, 18. The X-axis 26 of this local glass- or plastic body coordinate system 20 is parallel to the imagined connecting line 24. The profile of the X-axis of the local glass body coordinate system 20 corresponds to the lens horizontal of the spectacles lens 4. The Y-axis 28 of the coordinate system 20 is perpendicular to the imagined connecting line 24. The marking points 16, 18 are the two definition points for the local glass body coordinate system 20 of the spectacles lens 4.

The spectacles lens 4 has respectively one marking 30, 32 in the marking point 16 and in the marking point 18. The markings 30, 32 are permanent markings. The markings 30, 32 are composed of a multiplicity of pixels. The markings 30, 32 are manufactured by laser engraving. The set of pixels of the markings 30, 32 respectively has a convex envelope 34, 36 with a square external contour. Here, in accordance with the definition of "convex envelope" specified in the German "Wikipedia", the convex envelope of a set is understood to mean the smallest convex set containing the set.

The side length A of the square external contour of the convex envelope 34, 36 is respectively 2 mm. The position of the marking points 16, 18 is specified on the spectacles lens 4 by the position of the markings 30, 32. The location of the geometric centroid of the convex envelope 34, 36 of the marking 30, 32, i.e. the surface surrounded by the square external contour of the convex envelope 34, 36, corresponds to the geometric location of the marking points 16, 18. The markings 30, 32 are phase objects. They are therefore invisible to a spectacles wearer when wearing the spectacles. The marking 30 is designed as company logo.

In the coordinate system 20, the points of the near reference point 12 and the distance reference point 14 can be uniquely described by the tuple of numbers (x_{N}, y_{N}) for the near reference point and the tuple of numbers (x_{F}, y_{F}) for the distance reference point.

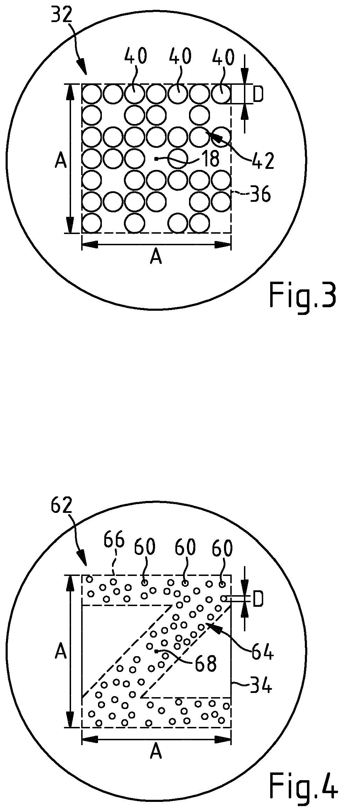

Figure 3 shows a section III of the spectacles lens 4 from Figure 2. The marking 32 is a data matrix code. The data matrix code contains data. This data matrix code corresponds to the ISO/IEC 16022:2000 standard. The marking 32 consists of a multiplicity of pixels 40. The pixels 40 have a diameter D = 80 µm. The pixels are burnt into the spectacles lens with a depth of T = 2 µm by means of laser radiation from an excimer laser. The arrangement of the pixels 40 defines information in the data matrix code.

The information from the data matrix code of the marking 32 individualizes the spectacles lens 4. To this end, the information in the marking 32 consists of a database address for a database in which specifications of the spectacles lens manufacturer in respect of the spectacles lens are stored. Alternatively, or in addition thereto, the data matrix code of the marking 32 can contain the information in respect of the points of the near reference point 12 and the distance reference point 14 in the form of the tuple of numbers (x_{N}, y_{N}) for the near reference point and the tuple of numbers (x_{F}, y_{F}) for the distance reference point. Moreover, the data matrix code of the marking 32 can alternatively, or in addition thereto, also comprise the information in respect of the material of the spectacles lens, the refractive index thereof and the value of the curvatures of the spectacles lens 4 on the front surface and back surface, at the distance and near reference points 14, 12 or at the positions opposite these points.

Figure 4 shows a section of a further spectacles lens with a marking 62 composed of pixels 60. The diameter D of the pixels 60 corresponds to D ≈ 80 µm. The pixels 60 are also burnt into the spectacles lens to a depth of T ≈ 2 µm by means of laser radiation from an excimer laser. The arrangement of the pixels 60 is encoded information which individualizes the corresponding spectacles lens and which can be read by a suitable reader. Here, the pixels 60 of the marking 62 form a pattern 64, the outer contour 66 of which reproduces a company logo or trademark, which corresponds to the letter Z. The geometric centroid 68 of the convex envelope 34 corresponds to a marking point in the spectacles lens.

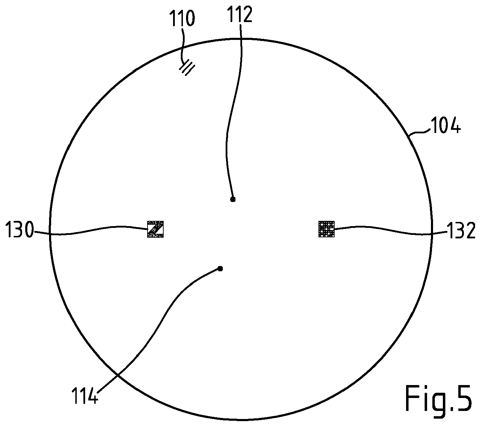

Figure 5 shows a glass- or plastic body embodied as spectacles lens blank 104. The spectacles lens blank 104 has markings 130, 132 which correspond to the markings 30, 32 on the spectacles lens 4 from figure 1. The markings 130, 132 are situated on the image-side surface of the spectacles lens blank 104, i.e. on the surface facing away from the object. Information individualizing the spectacles lens blank 104, e.g. an address in a database in which manufacturing-related data with respect to the spectacles lens blank 104 is stored, is stored thereon in the form of the marking 132. This manufacturing-related data can include e.g. the material of the spectacles lens, the refractive index thereof, the coordinates of the distance and near region points 114, 112, the value of the curvatures of the spectacles lens 104 on the front surface and back surface, at the distance and near region points 114, 112 or at the positions opposite these points, and also the date and location of the spectacles lens manufacture.

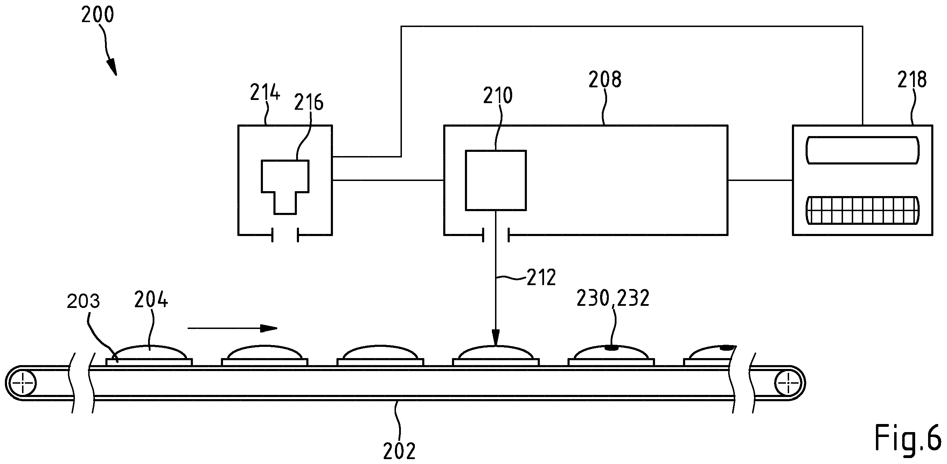

Figure 6 shows a device 200 for marking spectacles lens semi-finished products or lens blanks 204 with a data matrix code. The device 200 contains a conveying apparatus 202, on which the spectacles lens blanks 204 are fed to a marking system 208.

The spectacles lens blanks 204 are arranged on a supporting device 203. For example the spectacles lens blanks 204 can be blocked on such supporting device. In the supporting device 203, the position of the local coordinate system of the spectacles lens blank 204 is well defined with respect to the local coordinate system of the supporting device 203.

The marking system 208 comprises an excimer laser 210. The excimer laser 210 generates a spatially displaceable laser beam 212, by means of which a data matrix code can be written into a spectacles lens semi-finished product 204. However, in principle, the device 200 can also be used to mark finished spectacles lenses and raw spectacles lens blanks.

It is possible also to design the marking system 208 for marking spectacles lens glass- or plastic bodies by chiselling, micro-drilling, impressing or printing.

A referencing arrangement 214 with a camera 216 is in the device 200. The referencing arrangement 214 is used to reference the spatial coordinates of the glass- or plastic bodies in the form of a spectacles lens, a spectacles lens semi-finished product or a spectacles lens blank 204, which was fed to the marking system 208, with respect to a coordinate system affixed to the marking system 208. For referencing the spatial coordinates of the glass- or plastic bodies 204, the geometry of the supporting device 203 is viewed with the camera 216 using image processing and relating the local coordinate system of the spectacles lens blank 204 affixed to the marking system 208.

It is to be noted that the referencing arrangement 214 also could be an adapter for a supporting device 203 for the spectacles lens blanks 204, e.g. an adapter which is formed as a chuck, in which the supporting device 203 can have only a single well defined relative position in the coordinate system of the marking system 208.

These coordinates are transmitted to the marking system 208. This ensures that the marking system 208 can be used to write a data matrix code, which is oriented and arranged in a defined fashion with respect to a local coordinate system of the glass- or plastic body, onto such a glass body 204. The device 200 has an interface 218 for reading individualization information for a glass- or plastic body. This individualization information can for example, as mentioned above, be an address under which manufacturing-specific data in respect of the glass- or plastic body are correspondingly stored in a database. The individualization information can also comprise a running number, which specifies optical parameters of the spectacles lens blank, the material of which the spectacles lens blank consists, and the location and date of the manufacture thereof. This information is transmitted to the marking system 208, in order to store it in the form of a data matrix code on a spectacles lens blank 204.

To this end, the laser beam 212 from the marking system 208 in the device 200 is used to write the appropriate data matrix code into each glass body 204, in the form of a marking 230 on a first marking point of the glass- or plastic body 204. A further marking 332 is additionally applied to the second marking point. The further marking 332 is a trademark or a company logo.

On the glass- or plastic body 204, the position of the markings 230, 232 defines the lens horizontal and the local coordinate system in which the coordinates stored in the data matrix code of the marking 232 specify the distance and near reference point of the spectacles lens glass- or plastic body 204.

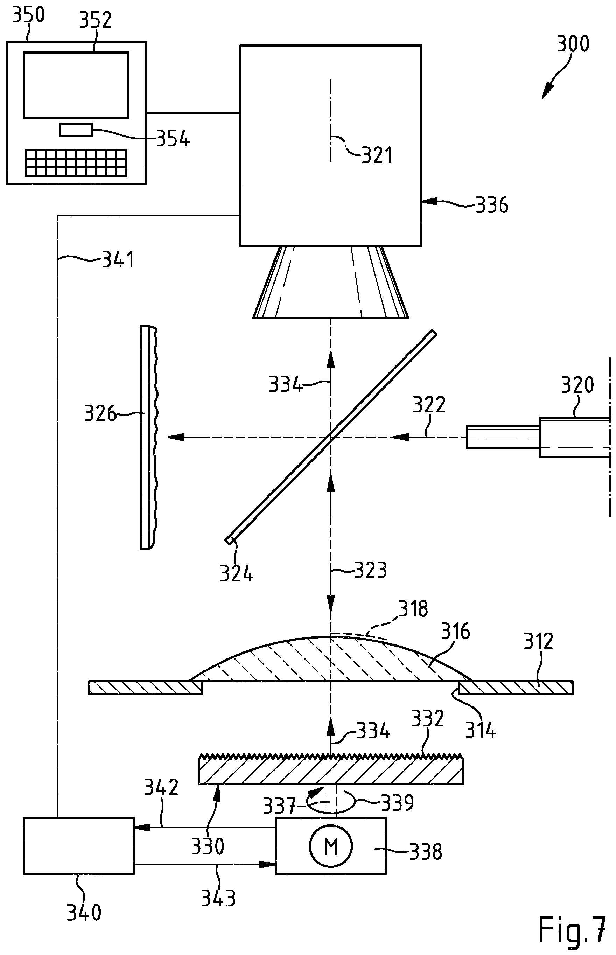

Figure 7 shows a device 300 by means of which the information stored on a spectacles lens in the form of a data matrix code can be read.

The device 300 has a spectacles lens holder 312. The spectacles lens holder 312 has a cut-out 314. A spectacles lens 316 with a marking 318 in the form of a data matrix code is situated in the holder. The device 300 contains a light source 320 for illumination light and a beam splitter 324. The light source 320 generates light which is guided to the beam splitter 324 with an optical beam path 322. The beam splitter deflects a first part of this light to the spectacles lens 314 with the beam path 323. This light passes through the spectacles lens 316 and is reflected at a rotating retroreflector 332. The light reflected by the retroreflector 332 once again passes through the spectacles lens 316 with the beam path 334 and is fed to a digital camera 336 via the beam splitter 324. The digital camera 336 has an optical axis 321. As a result of the optical axis 321 of the digital camera 336 lying flush with the optical axis of the beam path 334, it is possible to achieve good imaging quality for spectacles lens markings in the camera.

There is a motor 338 in the device 300 for rotating the retroreflector 332; said motor is connected to the retroreflector 332 via a drive shaft 339. In order to capture the light from the light source 320 which passes through the beam splitter 324 in the direction of the beam path 322, the device 300 contains a light trap 326.

Rotating the retroreflector 332 brings about a homogenization of the image background with which the digital camera 336 captures the marking 318 on the spectacles lens 304. To this end, a control instrument 340 is used to synchronize the rotational movement of the retroreflector 332 with the times of an image recording by the digital camera 336 by means of electrical connection lines 341, 342, 343.

The device 300 contains a computer unit 350 with an output interface in the form of a monitor 352. The computer unit 350 is connected to the digital camera 336. The computer unit 350 has a program storage medium 354 for capturing and decoding a marking 318, embodied as data matrix code, of a spectacles lens 316.

In order to read the data matrix code on a spectacles lens 316, illumination light passes through the spectacles lens 316 while the retroreflector 332 is moving and the section of the spectacles lens 316 with the marking 318 embodied as data matrix code is recorded by the digital camera 336. The image recorded in the process is read and processed by the computer unit 350 in order to display the decoded information of the data matrix code on the monitor 352.

## Claims

1. Method for storing digital information on a glass- or plastic body embodied as spectacle lens (4) or spectacle lens blank (104) or spectacle lens semi-finished product (204), said method comprising providing a spectacle lens (4) or spectacle lens blank (104) or spectacle lens semi-finished product (204) with a permanent marking (32) and a further permanent marking (30) arranged on or in the glass- or plastic body (4, 104, 204),
whereby one of said permanent markings (30, 32) contains information in the form of a data matrix code which individualizes the glass- or plastic body (4),
whereby said permanent marking (32) is arranged at a definition point (18) of the local glass- or plastic body coordinate system (20) as it is defined by the standardization regulations DIN EN ISO 8980 -2:2004, and said further permanent marking (30) is arranged at a definition point (18) of the local glass- or plastic body coordinate system (20) as it is defined by the standardization regulations DIN EN ISO 8980-2:2004.
**characterized in that**
the data matrix code comprises the positions of the near reference point (12) and the distance reference point (14) in the form of the tuple of numbers (xN, yN) for the near reference point and the tuple of number (xF, yF) for the distance reference point with respect to said coordinate system.

2. Method according to Claim 1, **characterized in that** the permanent marking (32) created on or in the glass- or plastic body (4) and containing information in the form of a data matrix code which individualizes the glass- or plastic body (4) is a phase object which, when irradiated by light in the visible spectral range, only changes the phase of the light waves passing through the object without there being a significant influence on the amplitude of the light waves in the process and the further permanent marking (30) is designed as trademark and/or company logo.

3. Method according to Claim 1 or 2, **characterized in that** the permanent marking (32) containing information in the form of a data matrix code which individualizes the glass- or plastic body (4) is created by laser engraving, chiselling, micro-drilling, impressing or printing.

4. Method according to Claim 3, **characterized in that** a multiplicity of pixels (40) are generated for creating the permanent marking (32) containing information in the form of a data matrix code which individualizes the glass- or plastic body (4) on or in the glass- or plastic body (4), said pixels having a diameter D lying in the range 60 µm ≤ D ≤ 100 µm and having a depth T which is 0.5 µm ≤ T ≤ 2.5 µm.

5. Method according to one of Claims 1 or 4, **characterized in that** the permanent marking (32) containing information in the form of a data matrix code which individualizes the glass- or plastic body (4) has a convex envelope (36) with a square external contour which has a side length A, which is preferably 1.5 mm ≤ A ≤ 2.5 mm and/or **in that** the geometric centroid (18) of the convex envelope (36) of the permanent marking (32) containing information in the form of a data matrix code which individualizes the glass- or plastic body (4) is the definition point (16) of the local glass- or plastic body coordinate system (20) and/or **in that** the pixels (60) of the permanent marking (62) containing information in the form of a data matrix code which individualizes the glass- or plastic body (4) are arranged in a pattern (64), the external contour (66) of which reproduces a trademark and/or a company logo, more particularly a letter, and/or **in that** the pixels (60) of the marking (62) replicate a trademark and/or a company logo (32).

6. Glass- or plastic body embodied as spectacle lens (4), spectacles lens blank (104) for a spectacles lens or spectacle lens semi-finished product (204) for a spectacles lens, said glass- or plastic body comprising a permanent marking (32) and a further permanent marking (30) arranged on or in the glass- or plastic body (4, 104, 204),
whereby one of said permanent markings (30, 32) contains information in the form of a data matrix code which individualizes the glass- or plastic body (4),
whereby said permanent marking (32) is arranged at a definition point (18) of the local glass- or plastic body coordinate system (20) as it is defined by the standardization regulations DIN EN ISO 8980 -2:2004, and said further permanent marking (30) is arranged on or in the glass- or plastic body (4, 104, 204) at a definition point (18) of the local glass- or plastic body coordinate system (20) as it is defined by the standardization regulations DIN EN ISO 8980-2:2004,
**characterized in that**
the data matrix code is readable by a device containing a light source (320) for illumination light passing through the spectacles lens (316) and being reflected at a rotating retroreflector (332) to pass again through the spectacles lens for being fed to a camera (336) and including a computer unit (350) having a program storage medium (354) with software for capturing and decoding said one permanent marking (30, 32) in the form of said data matrix code, and the data matrix code comprises the positions of the near reference point (12) and the distance reference point (14) in the form of the tuple of numbers (xN, yN) for the near reference point and the tuple of number (xF, yF) for the distance reference point with respect to said coordinate system.

7. Glass- or plastic body according to Claim 5 or 6, **characterized in that** the permanent marking (32) created on or in the glass- or plastic body (4) and containing information in the form of a data matrix code which individualizes the glass- or plastic body (4) is a phase object which, when irradiated by light in the visible spectral range, only changes the phase of the light waves passing through the object without there being a significant influence on the amplitude of the light waves in the process and the further permanent marking (30) is designed as trademark and/or company logo.

8. Glass- or plastic body according to one of Claims 5 to 7, **characterized in that** the permanent marking containing information in the form of a data matrix code which individualizes the glass- or plastic body (4) contains a multiplicity of pixels (40) which have a diameter D lying in the range 60 µm ≤ D ≤ 100 µm and which have a depth T which is 0.5 µm ≤ T ≤ 2.5 µm.

9. Glass- or plastic body according to Claim 8, **characterized in that** the pixels (60) of the permanent marking (62) containing information in the form of a data matrix code which individualizes the glass- or plastic body (4) replicate a trademark and/or a company logo (32).

10. Glass- or plastic body according to Claim 9, **characterized in that** the set of pixels (60) of the permanent marking (32) containing information in the form of a data matrix code which individualizes the glass- or plastic body (4) has a convex envelope (36) with a square external contour which has a side length A, which is preferably 1.5 mm ≤ A ≤ 2.5 mm.

11. Glass- or plastic body according to Claim 10, **characterized in that** the geometric centroid (18) of the convex envelope (36) of the permanent marking (32) containing information in the form of a data matrix code which individualizes the glass- or plastic body (4) is the definition point (16) of the local glass- or plastic body coordinate system (20).

12. Glass- or plastic body according to Claim 10 or 11, **characterized in that** the external contour (66) of the permanent marking (62) containing information in the form of a data matrix code which individualizes the glass- or plastic body (4) reproduces a trademark and/or a company logo, more particularly a letter.

13. Device (200) for storing information on a glass- or plastic body embodied as spectacle lens (4), spectacle lens blank (104) for a spectacle lens or spectacle lens semi-finished product (204) for a spectacle lens, said device executing a method according to one of Claims 1 to 5,
**characterized by**
a marking system (208) for marking a glass- or plastic body (204), by virtue of a marking (230, 232) containing information individualizing a glass- or plastic body (204) being created on or in the glass- or plastic body (204), an interface (218) connected to the marking system (208), for reading information individualizing the glass- or plastic body (204) to be marked, and a referencing arrangement (214), connected to the marking system (208), for establishing the position of the local glass- or plastic body coordinate system (20) on the glass- or plastic body (204) to be marked, specifying the lens horizontal (24) and/or the distance and/or the near reference point (14, 12) and/or the prism reference point, with the marking system (208) marking the glass- or plastic body (204) by virtue of the fact that the information, read in at the interface (218) and individualizing this glass- or plastic body (204), is transferred onto or into the glass- or plastic body (204) by applying a marking (230, 232) containing this information to a definition point (16, 18) of the local glass- or plastic body coordinate system (20), established by the referencing arrangement (214) for this glass- or plastic body, specifying the lens horizontal (24) and/or the distance and/or near reference point (14, 12) and/or the prism reference point (11).

## Patentansprüche

1. Verfahren zum Speichern von digitaler Information in einem Glas- oder Kunststoffkörper, der als Brillenglas (4) oder Brillenglasrohling (104) oder Brillenglashalbfabrikat (204) verkörpert ist, das Verfahren aufweisend das Versehen eines Brillenglases (4) oder Brillenglasrohlings (104) oder Brillenglashalbfabrikats (204) mit einer permanenten Markierung (32) und einer weiteren permanenten Markierung (30), die am oder im Glas- oder Kunststoffkörper (4, 104, 204) angeordnet wird, wobei eine der permanenten Markierungen (30, 32) Information in der Form eines Datenmatrixcodes enthält, der den Glas- oder Kunststoffkörper (4) individualisiert,
wobei die permanente Markierung (32) an einem Definitionspunkt (18) des lokalen Glas- oder Kunststoffkörperkoordinatensystems (20) angeordnet wird, wie durch die Normungsregelungen DIN EN ISO 8980-2:2004 definiert, und die weitere permanente Markierung (30) an einem Definitionspunkt (18) des lokalen Glas- oder Kunststoffkörperkoordinatensystems (20) angeordnet wird, wie durch die Normungsregelungen DIN EN ISO 8980-2:2004 definiert,
**dadurch gekennzeichnet, dass**
der Datenmatrixcode die Positionen des Nahreferenzpunkts (12) und des Fernreferenzpunkts (14) in der Form des Zahlentupels (xN, yN) für den Nahreferenzpunkt und des Zahlentupels (xF, yF) für den Fernreferenzpunkt bezüglich des Koordinatensystems aufweist.

2. Verfahren nach Anspruch 1, **dadurch gekennzeichnet, dass** die permanente Markierung (32), die am oder im Glas- oder Kunststoffkörper (4) geschaffen wird und Information in der Form eines Datenmatrixcodes enthält, der den Glas- oder Kunststoffkörper (4) individualisiert, ein Phasenobjekt ist, das, wenn es von Licht im sichtbaren Spektralbereich angestrahlt wird, nur die Phasen der Lichtwellen ändert, die das Objekt durchlaufen, ohne dass ein erheblicher Einfluss auf die Amplitude der Lichtwellen im Prozess vorliegt, und dass die weitere permanente Markierung (30) als Warenzeichen und/oder Firmenlogo gestaltet ist.

3. Verfahren nach einem der Ansprüche 1 oder 2, **dadurch gekennzeichnet, dass** die permanente Markierung (32), die Information in der Form eines Datenmatrixcodes enthält, der den Glas- oder Kunststoffkörper (4) individualisiert, durch Lasergravur, Meißeln, Mikrobohren, Aufprägen oder Aufdrucken geschaffen wird.

4. Verfahren nach Anspruch 3, **dadurch gekennzeichnet, dass** eine Vielzahl von Pixeln (40) zum Schaffen der permanenten Markierung (32), die Information in der Form eines Datenmatrixcodes enthält, der den Glas- oder Kunststoffkörper (4) individualisiert, am oder im Glas- oder Kunststoffkörper (4) erzeugt wird, wobei die Pixel einen Durchmesser D aufweisen, der im Bereich von 60 µm ≤ D ≤ 100 µm liegt, und eine Tiefe T aufweisen, die 0,5 µm ≤ T ≤ 2,5 µm beträgt.

5. Verfahren nach einem der Ansprüche 1 oder 4, **dadurch gekennzeichnet, dass** die permanente Markierung (32), die Information in der Form eines Datenmatrixcodes enthält, der den Glas- oder Kunststoffkörper (4) individualisiert, eine konvexe Hülle (36) mit einer quadratischen Außenkontur aufweist, die eine Seitenlänge A aufweist, welche vorzugsweise 1,5 mm ≤ A ≤ 2,5 mm beträgt, und/oder dass der geometrische Schwerpunkt (18) der konvexen Hülle (36) der permanenten Markierung (32), die Information in der Form eines Datenmatrixcodes enthält, der den Glas- oder Kunststoffkörper (4) individualisiert, der Definitionspunkt (16) des lokalen Glas- oder Kunststoffkörperkoordinatensystems (20) ist, und/oder dass die Pixel (60) der permanenten Markierung (62), die Information in der Form eines Datenmatrixcodes enthält, der den Glas- oder Kunststoffkörper (4) individualisiert, in einem Muster (64) angeordnet sind, dessen Außenkontur (66) ein Warenzeichen und/oder ein Firmenlogo, insbesondere einen Buchstaben, wiedergibt, und/oder dass die Pixel (60) der Markierung (62) ein Warenzeichen und/oder ein Firmenlogo (32) nachbilden.

6. Glas- oder Kunststoffkörper, der als Brillenglas (4), Brillenglasrohling (104) für ein Brillenglas oder Brillenglashalbfabrikat (204) für ein Brillenglas verkörpert ist, der Glas- oder Kunststoffkörper aufweisend eine permanente Markierung (32) und eine weitere permanente Markierung (30), die am oder im Glas- oder Kunststoffkörper (4, 104, 204) angeordnet sind, wobei eine der permanenten Markierungen (30, 32) Information in der Form eines Datenmatrixcodes enthält, der den Glas- oder Kunststoffkörper (4) individualisiert,
wobei die permanente Markierung (32) an einem Definitionspunkt (18) des lokalen Glas- oder Kunststoffkörperkoordinatensystems (20) angeordnet wird, wie durch die Normungsregelungen DIN EN ISO 8980-2:2004 definiert, und die weitere permanente Markierung (30) am oder im Glas- oder Kunststoffkörper (4, 104, 204) an einem Definitionspunkt (18) des lokalen Glas- oder Kunststoffkörperkoordinatensystems (20) angeordnet wird, wie durch die Normungsregelungen DIN EN ISO 8980-2:2004 definiert,
**dadurch gekennzeichnet, dass**
der Datenmatrixcode durch ein Gerät lesbar ist, das eine Lichtquelle (320) für Beleuchtungslicht enthält, das das Brillenglas (316) durchläuft und an einem Retro-Reflektor (332) zum erneuten Durchlaufen des Brillenglases reflektiert wird, um einer Kamera (336) zugeführt zu werden, und eine Rechnereinheit (350) mit einem Programmspeichermedium (354) mit Software zum Erfassen und Decodieren der einen permanenten Markierung (30, 32) in der Form des Datenmatrixcodes enthält, und dass der Datenmatrixcode die Positionen des Nahreferenzpunkts (12) und des Fernreferenzpunkts (14) in der Form des Zahlentupels (xN, yN) für den Nahreferenzpunkt und des Zahlentupels (xF, yF) für den Fernreferenzpunkt bezüglich des Koordinatensystems aufweist.

7. Glas- oder Kunststoffkörper nach einem der Ansprüche 5 oder 6, **dadurch gekennzeichnet, dass** die permanente Markierung (32), die am oder im Glas- oder Kunststoffkörper (4) geschaffen ist und Information in der Form eines Datenmatrixcodes enthält, der den Glas- oder Kunststoffkörper (4) individualisiert, ein Phasenobjekt ist, das, wenn es von Licht im sichtbaren Spektralbereich angestrahlt wird, nur die Phasen der Lichtwellen ändert, die das Objekt durchlaufen, ohne dass ein erheblicher Einfluss auf die Amplitude der Lichtwellen im Prozess vorliegt, und dass die weitere permanente Markierung (30) als Warenzeichen und/oder Firmenlogo gestaltet ist.

8. Glas- oder Kunststoffkörper nach einem der Ansprüche 5 bis 7, **dadurch gekennzeichnet, dass** die permanente Markierung, die Information in der Form eines Datenmatrixcodes enthält, der den Glas- oder Kunststoffkörper (4) individualisiert, eine Vielzahl von Pixeln (40) enthält, welche einen Durchmesser D aufweisen, der im Bereich von 60 µm ≤ D ≤ 100 µm liegt, und welche eine Tiefe T aufweisen, die 0,5 µm ≤ T ≤ 2,5 µm beträgt.

9. Glas- oder Kunststoffkörper nach Anspruch 8, **dadurch gekennzeichnet, dass** die Pixel (60) der permanenten Markierung (62), die Information in der Form eines Datenmatrixcodes enthält, der den Glas- oder Kunststoffkörper (4) individualisiert, ein Warzenzeichen und/oder ein Firmenlogo (32) nachbilden.

10. Glas- oder Kunststoffkörper nach Anspruch 9, **dadurch gekennzeichnet, dass** der Satz von Pixeln (60) der permanenten Markierung (32), die Information in der Form eines Datenmatrixcodes enthält, der den Glas- oder Kunststoffkörper (4) individualisiert, eine konvexe Hülle (36) mit einer quadratischen Außenkontur aufweist, die eine Seitenlänge A aufweist, welche vorzugsweise 1,5 mm ≤ A ≤ 2,5 mm beträgt.

11. Glas- oder Kunststoffkörper nach Anspruch 10, **dadurch gekennzeichnet, dass** der geometrische Schwerpunkt (18) der konvexen Hülle (36) der permanenten Markierung (32), die Information in der Form eines Datenmatrixcodes enthält, der den Glas- oder Kunststoffkörper (4) individualisiert, der Definitionspunkt (16) des lokalen Glas- oder Kunststoffkörperkoordinatensystems (20) ist.

12. Glas- oder Kunststoffkörper nach einem der Ansprüche 10 oder 11, **dadurch gekennzeichnet, dass** die Außenkontur (66) der permanenten Markierung (62), die Information in der Form eines Datenmatrixcodes enthält, der den Glas- oder Kunststoffkörper (4) individualisiert, ein Warenzeichen und/oder ein Firmenlogo, insbesondere einen Buchstaben, wiedergibt.

13. Gerät (200) zum Speichern von Information in einem Glas- oder Kunststoffkörper, der als Brillenglas (4), Brillenglasrohling (104) für ein Brillenglas oder Brillenglashalbfabrikat (204) für ein Brillenglas verkörpert ist, wobei das Gerät ein Verfahren nach einem der Ansprüche 1 bis 5 ausführt, **gekennzeichnet durch**
ein Markierungssystem (208) zum Markieren eines Glas- oder Kunststoffkörpers (204) durch eine Markierung (230, 232), die Information enthält, welche einen Glas- oder Kunststoffkörper (204) individualisiert, und die am oder im Glas- oder Kunststoffkörper (204) geschaffen wird, eine Schnittstelle (218), die mit dem Markierungssystem (208) verbunden ist, zum Lesen von Information, die den Glas- oder Kunststoffkörper (204), der markiert werden soll, individualisiert, und eine Referenzierungsanordnung (214), die mit dem Markierungssystem (208) verbunden ist, zum Einrichten der Position des lokalen Glas- oder Kunststoffkörperkoordinatensystems (20) am Glas- oder Kunststoffkörper (204), der markiert werden soll, wodurch die Glashorizontale (24) und/oder der Fern- und/oder der Nahreferenzpunkt (14, 12) und/oder der Prismareferenzpunkt spezifiziert wird, wobei das Markierungssystem (208) den Glas- oder Kunststoffkörper (204) aufgrund der Tatsache markiert, dass die Information, die an der Schnittstelle (218) eingelesen wird und den Glas- oder Kunststoffkörper (204) individualisiert, auf oder in den Glas- oder Kunststoffkörper (204) durch Aufbringen einer Markierung (230, 232), die diese Information enthält, an einen Definitionspunkt (16, 18) des lokalen Glas- oder Kunststoffkörperkoordinatensystems (20) übertragen wird, das durch die Referenzierungsanordnung (214) für diesen Glas- oder Kunststoffkörper eingerichtet wurde und die Glashorizontale (24) und/oder den Fern- und/oder Nahreferenzpunkt (14, 12) und/oder den Prismareferenzpunkt (11) spezifiziert.

## Revendications

1. Procédé d'enregistrement d'informations numériques sur un corps en verre ou en plastique réalisé sous la forme d'un verre (4) de lunettes ou d'un palet (104) de lunettes ou d'un produit semi-fini (204) de verre de lunettes, ledit procédé consistant à doter un verre (4) de lunettes ou un palet (104) de lunettes ou un produit semi-fini (204) de verre de lunettes d'un marquage permanent (32) et d'un marquage permanent supplémentaire (30) agencés sur ou dans le corps en verre ou en plastique (4, 104, 204),
moyennant quoi un desdits marquages permanents (30, 32) contient des informations sous la forme d'un code matriciel de données qui individualise le corps en verre ou en plastique (4),
moyennant quoi ledit marquage permanent (32) est agencé en un point de définition (18) du système de coordonnées (20) local du corps en verre ou en plastique alors qu'il est défini par la réglementation de normalisation DIN EN ISO 8980-2:2004, et ledit marquage permanent supplémentaire (30) est agencé en un point de définition (18) du système de coordonnées (20) local du corps en verre ou en plastique alors qu'il est défini par la réglementation de normalisation DIN EN ISO 8980-2:2004.
le code matriciel de données comprend les positions du point de référence proche (12) et du point de référence distant (14) sous la forme du tuple des nombres (xN, yN) pour le point de référence proche et du tuple du nombre (xF, yF) pour le point de référence distant par rapport audit système de coordonnées.

2. Procédé selon la revendication 1, **caractérisé en ce que** le marquage permanent (32) créé sur ou dans le corps en verre ou en plastique (4) et contenant des informations sous la forme d'un code matriciel de données qui individualise le corps en verre ou en plastique (4) est un objet de phase qui, lorsqu'il est exposé à une lumière dans la plage spectrale visible, change uniquement la phase des ondes lumineuses passant à travers l'objet sans qu'il n'y ait d'influence significative sur l'amplitude des ondes lumineuses dans le processus et le marquage permanent supplémentaire (30) est conçu en tant que marque de commerce et/ou logo de société.

3. Procédé selon la revendication 1 ou 2, **caractérisé en ce que** le marquage permanent (32) contenant des informations sous la forme d'un code matriciel de données qui individualise le corps en verre ou en plastique (4) est créé par gravure laser, ciselure, microperçage ou impression.

4. Procédé selon la revendication 3, **caractérisé en ce que** de multiples pixels (40) sont générés pour créer le marquage permanent (32) contenant des informations sous la forme d'un code matriciel de données qui individualise le corps en verre ou en plastique (4) sur ou dans le corps en verre ou en plastique (4), lesdits pixels ayant un diamètre D se trouvant dans la plage de 60 µm ≤ D ≤ 100 µm et ayant une profondeur T qui est 0,5 µm ≤ T ≤ 2,5 µm.

5. Procédé selon l'une des revendications 1 ou 4, **caractérisé en ce que** le marquage permanent (32) contenant des informations sous la forme d'un code matriciel de données qui individualise le corps en verre ou en plastique (4) a une enveloppe convexe (36) avec un contour externe carré qui a une longueur de côté A, qui est de préférence 1,5 mm ≤ A ≤ 2,5 mm et/ou **en ce que** le centroïde géométrique (18) de l'enveloppe convexe (36) du marquage permanent (32) contenant des informations sous la forme d'un code matriciel de données qui individualise le corps en verre ou en plastique (4) est le point de définition (16) du système de coordonnées (20) local du corps en verre ou en plastique et/ou **en ce que** les pixels (60) du marquage permanent (62) contenant des informations sous la forme d'un code matriciel de données qui individualise le corps en verre ou en plastique (4) sont agencés dans un motif (64), dont le contour externe (66) reproduit une marque de commerce et/ou un logo de société, plus particulièrement une lettre, et/ou **en ce que** les pixels (60) du marquage (62) répliquent une marque de commerce et/ou un logo de société (32).

6. Corps en verre ou en plastique réalisé sous la forme d'un verre (4) de lunettes, d'un palet (104) de lunettes pour un verre de lunettes ou un produit semi-fini (204) de verre de lunettes, ledit corps en verre ou en plastique comprenant un marquage permanent (32) et un marquage permanent supplémentaire (30) agencés sur ou dans le corps en verre ou en plastique (4, 104, 204),
moyennant quoi un desdits marquages permanents (30, 32) contient des informations sous la forme d'un code matriciel de données qui individualise le corps en verre ou en plastique (4),
moyennant quoi ledit marquage permanent (32) est agencé en un point de définition (18) du système de coordonnées (20) local du corps en verre ou en plastique alors qu'il est défini par la réglementation de normalisation DIN EN ISO 8980-2:2004, et ledit marquage permanent supplémentaire (30) est agencé sur ou dans le corps en verre ou en plastique (4, 104, 204) en un point de définition (18) du système de coordonnées (20) local du corps en verre ou en plastique alors qu'il est défini par la réglementation de normalisation DIN EN ISO 8980-2:2004,
**caractérisé en ce que**
le code matriciel de données est lisible par un dispositif contenant une source de lumière (320) pour qu'une lumière d'éclairage passe par le verre (316) de lunettes et soit réfléchie au niveau d'un rétroréflecteur rotatif (332) pour passer à nouveau par le verre de lunettes pour être introduite dans un appareil de prise de vues (336) et comprenant une unité informatique (350) ayant un support d'enregistrement (354) de programme avec un logiciel pour capturer et décoder ledit marquage permanent (30, 32) sous la forme dudit code matriciel de données, et le code matriciel de données comprend les positions du point de référence proche (12) et du point de référence distant (14) sous la forme du tuple des nombres (xN, yN) pour le point de référence proche et le tuple du nombre (xF, yF) pour le point de référence distant par rapport audit système de coordonnées.

7. Corps en verre ou en plastique selon la revendication 5 ou 6, **caractérisé en ce que** le marquage permanent (32) créé sur ou dans le corps en verre ou en plastique (4) et contenant des informations sous la forme d'un code matriciel de données qui individualise le corps en verre ou en plastique (4) est un objet de phase qui, lorsqu'il est exposé à une lumière dans la plage spectrale visible, change uniquement la phase des ondes lumineuses passant à travers l'objet sans qu'il n'y ait d'influence significative sur l'amplitude des ondes lumineuses dans le processus et le marquage permanent supplémentaire (30) est conçu en tant que marque de commerce et/ou logo de société.

8. Corps en verre ou en plastique selon l'une quelconque des revendications 5 à 7, **caractérisé en ce que** le marquage permanent contenant des informations sous la forme d'un code matriciel de données qui individualise le corps en verre ou en plastique (4) contient de multiples pixels (40) qui ont un diamètre D situé dans la plage 60 µm ≤ D ≤ 100 µm et qui ont une profondeur T qui satisfait à 0,5 µm ≤ T ≤ 2,5 µm.

9. Corps en verre ou en plastique selon la revendication 8, **caractérisé en ce que** les pixels (60) du marquage permanent (62) contenant des informations sous la forme d'un code matriciel de données qui individualise le corps en verre ou en plastique (4) répliquent une marque de commerce et/ou un logo de société (32).

10. Corps en verre ou en plastique selon la revendication 9, **caractérisé en ce que** l'ensemble de pixels (60) du marquage permanent (32) contenant des informations sous la forme d'un code matriciel de données qui individualise le corps en verre ou en plastique (4) a une enveloppe convexe (36) dotée d'un contour externe carré qui a une longueur de côté A, qui satisfait de préférence à 1,5 mm ≤ A ≤ 2,5 mm.

11. Corps en verre ou en plastique selon la revendication 10, **caractérisé en ce que** le centroïde géométrique (18) de l'enveloppe convexe (36) du marquage permanent (32) contenant des informations sous la forme d'un code matriciel de données qui individualise le corps en verre ou en plastique (4) est le point de définition (16) du système de coordonnées (20) local du corps en verre ou en plastique.

12. Corps en verre ou en plastique selon la revendication 10 ou 11, **caractérisé en ce que** le contour externe (66) du marquage permanent (62) contenant des informations sous la forme d'un code matriciel de données qui individualise le corps en verre ou en plastique (4) reproduit une marque de commerce et/ou un logo de société, plus particulièrement une lettre.

13. Dispositif (200) permettant d'enregistrer des informations sur un corps en verre ou en plastique réalisé sous la forme d'un verre (4) de lunettes, d'un palet (104) de lunettes pour un verre de lunettes ou un produit semi-fini (204) de verre de lunettes, ledit dispositif exécutant un procédé selon l'une des revendications 1 à 5,
**caractérisé par**
un système de marquage (208) pour marquer un corps en verre ou en plastique (204), en vertu d'un marquage (230, 232) contenant des informations individualisant un corps en verre ou en plastique (204) créé sur ou dans le corps en verre ou en plastique (204), une interface (218) connectée au système de marquage (208), pour lire des informations individualisant le corps en verre ou en plastique (204) à marquer, et un agencement de référencement (214), connecté au système de marquage (208), pour établir la position du système de coordonnées (20) local du corps en verre ou en plastique sur le corps en verre ou en plastique (204) à marquer, spécifiant l'horizontale (24) du verre et/ou le point de référence distant et/ou proche (14, 12) et/ou le point de référence prismatique, le système de marquage (208) marquant le corps en verre ou en plastique (204) en vertu du fait que les informations, lues au niveau de l'interface (218) et individualisant ce corps en verre ou en plastique (204), sont transférées sur ou dans le corps en verre ou en plastique (204) par l'application d'un marquage (230, 232) contenant ces informations vers un point de définition (16, 18) du système de coordonnées (20) local du corps en verre ou en plastique, établi par l'agencement de référencement (214) pour ce corps en verre ou en plastique, spécifiant l'horizontale (24) du verre et/ou le point de référence distant et/ou proche (14, 12) et/ou le point de référence prismatique (11).
